# EUROPEAN PATENT SPECIFICATION

(11) **EP 4 144 996 B1**
(45) Date of publication and mention of the grant of the patent: **18.02.2026**
(21) Application number: 22193612.3
(22) Date of filing: 02.09.2022
(51) Int. Cl.: F04D 25/08, F04D 25/10, F04D 29/40, F04D 29/46, F04D 29/56, F04D 29/62, F04D 29/64, F04F 5/16, F04F 5/46, F24F 13/12, F24F 13/20, F24F 7/003, F24F 13/28, F24F 11/00

(54) **BLOWER**
GEBLÄSE
SOUFFLANTE

(30) Priority: 03.09.2021 KR 20210117649
(43) Date of publication of application: 08.03.2023
(73) Proprietor: LG Electronics, Inc., Yeongdeungpo-gu Seoul 07336 (KR)
(72) Inventor: Lee, Kunyoung, Seoul (KR); Kim, Sumin, Seoul (KR); Kim, Bohyun, Seoul (KR); Ku, Myungjin, Seoul (KR)
(74) Representative: Vossius & Partner Patentanwälte Rechtsanwälte mbB

(56) References cited:
- WO-A1-2021/107696
- CN-A- 110 848 957
- CN-U- 208 846 680
- CN-U- 209 744 554

## Description

The present disclosure relates to a blower. More particularly, the present disclosure relates to a blower capable of controlling a blowing direction.

A blower may cause a flow of air to circulate air in an indoor space, or to form an airflow toward a user. In addition, a filter provided in the blower can purify indoor air.

In this regard, Korean Patent Publication Number KR2010-0051724 discloses a blower that forms an airflow by using the Coanda effect. The nozzle of the blower may form an airflow toward the outside of the blower, while forming an internal passage through which air flowing by an impeller passes. However, the above publication does not disclose a means for controlling the direction of the airflow.

WO 2021/107696 Al relates to an air conditioner including a heater for heating air discharged through the Coanda effect. CN 208 846 680 U relates to the technical field of structural reinforcement of an air conditioner sliding door. Recently, according to the needs of a user, a lot of research has been done on a structure capable of adjusting the blowing direction of the blower. An object of the present invention is to solve the above and other problems. Another object is to provide a blower capable of controlling the blowing direction. Another object may be to provide a driving mechanism of the damper for controlling the blowing direction of the blower. Another object is to provide a structure capable of improving the rigidity of a damper. Another object is to provide a bar that can be easily coupled to or detached from the damper.

The invention is specified by a blower defined by the independent claim. Preferred embodiments are defined in the dependent claims. Such a blower includes inter alia: a fan that generates a flow of air; a lower body that includes an internal space in which the fan is installed, and a suction hole providing air to the fan; a first upper body that is positioned above the lower body, communicates with the internal space of the lower body, and has a surface at which a first discharge hole is formed; a first damper that is movably coupled to the first upper body to selectively penetrate the surface of the first upper body, the first damper having a first end facing an outside of the first upper body, and a second end opposite to the first end; and a first bar extending along and coupled to the second end of the first damper.

### BRIEF DESCRIPTION OF THE DRAWINGS

The above and other objects, features and advantages of the present invention will be more apparent from the following detailed description in conjunction with the accompanying drawings, in which:
FIG. 1 is a perspective view of a blower according to an embodiment of the present disclosure;
FIG. 2 is a cross-sectional view taken along line X-X' of FIG. 1;
FIG. 3 is an exploded perspective view of a first upper body and a second upper body of a blower according to an embodiment of the present disclosure;
FIG. 4 is a perspective view illustrating a state in which a first outer panel is separated from a first upper body of a blower according to an embodiment of the present disclosure;
FIG. 5 is a perspective view illustrating an internal configuration of a portion of the first upper body and the second upper body of the blower by cutting out the portion according to an embodiment of the present disclosure;
FIG. 6 is a cross-sectional view taken along line Z-Z' of FIG. 1;
FIG. 7 and 8 are views for explaining a diffusion airflow formed in a first state of a blower according to an embodiment of the present disclosure, FIG. 7 is a top view of a blower, and FIG. 8 is a perspective view of a blower in which a dotted arrow expresses the diffusion airflow;
FIGS. 9 and 10 are views for explaining an upward airflow formed in a second state of the blower according to an embodiment of the present disclosure, FIG. 9 is a top view of the blower, and FIG. 10 is a perspective view of the blower in which a dotted arrow expresses the upward airflow;
FIG. 11 is an exploded perspective view of a second upper body according to an embodiment of the present disclosure;
FIG. 12 is a view illustrating a state in which a second inner panel of a second upper body is removed according to an embodiment of the present disclosure;
FIG. 13 is a perspective view of a second damper and a second bar coupled thereto as viewed from the inside of a second damper according to an embodiment of the present disclosure and according to the present invention;
FIGS. 14 to 17 are views for explaining an upper configuration of a second moving assembly according to an embodiment of the present disclosure;
FIGS. 18 to 20 are views for explaining a lower configuration of the second moving assembly according to an embodiment of the present disclosure;
FIG. 21 is a view illustrating a state in which a first outer panel of a first upper body is removed according to an embodiment of the present disclosure and according to the present invention;
FIG. 22 is a perspective view of a second damper and a second bar coupled thereto as viewed from the outside of the second damper according to an embodiment of the present disclosure and according to the present invention;
FIG. 23 is a perspective view of a bar according to an embodiment of the present disclosure and according to the present invention;
FIGS. 24 and 25 are cross-sectional views taken along line VI-VI' of FIG. 22, FIG. 24 is a view showing a bar according to an example of the present disclosure and according to the present invention, and FIG. 25 is a view showing a bar according to another example of the present disclosure and according to the present invention;
FIG. 26 is a cross-sectional view taken along line VII-VII' of FIG. 22; and
FIG. 27 is a cross-sectional view taken along line VIII-VIII' of FIG. 22.

Hereinafter, embodiments disclosed in the present specification will be described in detail with reference to the accompanying drawings, but the same or similar components are assigned the same reference numerals regardless of reference numerals, and redundant description thereof will be omitted.

In the present disclosure, that which is well known to one of ordinary skill in the relevant art has generally been omitted for the sake of brevity. The accompanying drawings are used to assist in easy understanding of various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are only used to distinguish one element from another

The direction indications of up (U), down (D), left (Le), right (Ri), front (F), and rear (R) shown in the drawings are only for convenience of description, and the technical concept disclosed in the present specification is not limited thereto.

The present invention is solely defined by the claims.

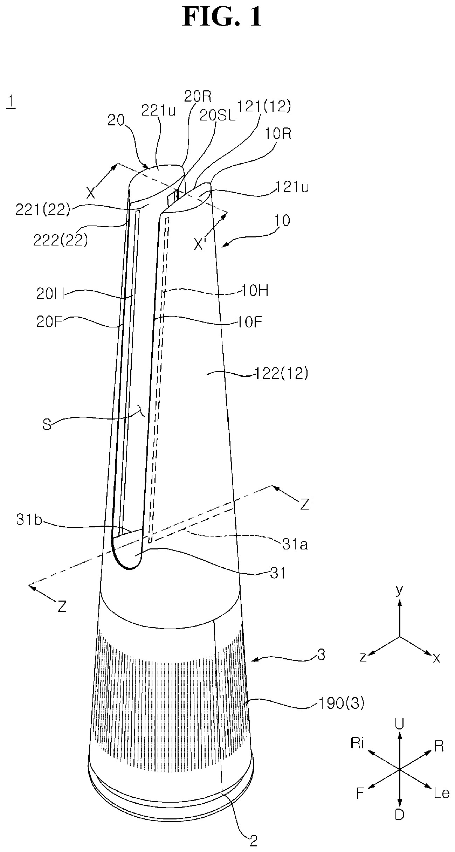

Referring to FIG. 1, a blower 1 may extend long in the up-down direction. The blower 1 may be referred to as an air conditioner or an air cleaner. The blower 1 may include a base 2, a lower body 3, and an upper body 10, 20.

The base 2 forms a lower surface of the blower 1 and may be placed on the floor of an indoor space. The base 2 may be formed in a circular plate shape as a whole.

The lower body 3 may be disposed in the upper side of the base 2. The lower body 3 may form the lower portion of side surface of the blower 1. The lower body 3 may be formed in a cylindrical shape as a whole. For example, the diameter of the lower body 3 may decrease as it progresses from the lower portion of the lower body 3 to the upper portion. As another example, the diameter of the lower body 3 may be uniformly maintained in the up-down direction. A suction hole 3a may be formed through the side surface of the lower body 3. For example, the plurality of suction holes 3a may be evenly disposed along the circumferential direction of the lower body 3. Accordingly, air may flow in from the outside of the blower 1 to the inside through the plurality of suction holes 3a.

The upper body 10, 20 is positioned above the lower body 3 and communicates by means of a flow path with the inner space of the lower body 3.

Referring to the drawing, for example, the upper body 10, 20 may include a first upper body 10 and a second upper body 20 spaced apart from each other.

As another example, the upper body 10, 20 may be provided as a single upper body. The upper body 10, 20 extends long in the up-down direction at the upper side of the lower body 3. The position of the single upper body 10, 20 with respect to the lower body 3 may be determined in consideration of the shape of the upper body 10, 20 and the position, shape, and number of slits, as an air discharge hole formed in the upper body 10, 20, formed on the surface of the upper body 10, 20.

Hereinafter, for a brief description, a case in which the upper body 10 and 20 includes the first upper body 10 and the second upper body 20 will be described. In addition, the description may be identically applicable even when the upper body 10 and 20 is provided as a single upper body, unless the description is applicable only to a case where the number of the upper body 10, 20 is two.

The first upper body 10 and the second upper body 20 may form upper side surfaces of the blower 1. The first upper body 10 and the second upper body 20 may extend long in the up-down direction, and may be spaced apart from each other in the left-right direction. Meanwhile, the first upper body 10 may be referred to as a first tower or a first nozzle tower, and the second upper body 20 may be referred to as a second tower or a second nozzle tower.

A space S may be formed between the first upper body 10 and the second upper body 20, and may provide an air flow path. The space S may be opened in the front-rear direction. Meanwhile, the space S may be referred to as a blowing space, a valley, or a channel.

The first upper body 10 may be spaced apart from the second upper body 20 to the left. The first upper body 10 extends long in the up-down direction. The first upper body 10 may include a first panel 12 forming a surface of the first upper body 10. The first panel 12 may include a first inner panel 121 facing the space S and a first outer panel 122 facing the first inner panel 121.

The first inner panel 121 may be convex in a direction from the first upper body 10 toward the space S, i.e., to the right. For example, the first inner panel 121 may extend long in the up-down direction. The first outer panel 122 may be convex in a direction opposite to the direction from the first upper body 10 toward the space S, i.e., to the left. For example, the first outer panel 122 may extend to be inclined by a certain angle (acute angle) in a direction toward the space S, that is, to the right with respect to a vertical line extending in the up-down direction.

In this case, the curvature of the first outer panel 122 may be greater than the curvature of the first inner panel 121. In addition, the first outer panel 122 may meet the first inner panel 121 to form an edge. The edge may be provided as a first front end 10F and a first rear end 10R of the first upper body 10. For example, the first front end 10F may extend to be inclined in the rearward direction by a certain angle (acute angle) with respect to a vertical line extending in the up-down direction. For example, the first rear end 10R may extend to be inclined in the forward direction by a certain angle (acute angle) with respect to a vertical line extending in the up-down direction.

The second upper body 20 may be spaced apart from the first upper body 10 to the right. The second upper body 20 may extend long in the up-down direction. The second upper body 20 may include a second panel 22 forming a surface of the second upper body 20. The second panel 22 may include a second inner panel 221 facing the space S, and a second outer panel 222 facing the second inner panel 221.

The second inner panel 221 may be convex in a direction from the second upper body 20 toward the space S, i.e., to the left. For example, the second inner panel 221 may extend long in the up-down direction. The second outer panel 222 may be convex in a direction from the second upper body 20 toward the space S, i.e., to the right. For example, the second outer panel 222 may extend to be inclined by a certain angle (acute angle) in a direction toward the space S with respect to a vertical line extending in the up-down direction, i.e., to the left.

In this case, the curvature of the second outer panel 222 may be greater than the curvature of the second inner panel 221. In addition, the second outer panel 222 may meet the first inner panel 221 to form an edge. The edge may be provided as a second front end 20F and a second rear end 20R of the second upper body 20. For example, the second front end 20F may extend in the rearward direction by a certain angle (acute angle) with respect to a vertical line extending in the up-down direction. For example, the second rear end 20R may extend in the forward direction by a certain angle (acute angle) with respect to a vertical line extending in the up-down direction.

Meanwhile, the first upper body 10 and the second upper body 20 may be symmetrical left and right with the space S interposed therebetween. In addition, the surface of the first outer panel 122 and the surface of the second outer panel 222 may be located on a virtual curved surface extending along the surface of the lower body 3. In other words, the surface of the first outer panel 122 and the surface of the second outer panel 222 may be smoothly connected to the surface of the lower body 3. In addition, the upper surface 121u of the first upper body 10 and the upper surface 221u of the second upper body 20 may be provided in a horizontal plane. In this case, the blower 1 may be formed in a truncated cone shape as a whole. Thus, the risk of the blower 1 being overturned by an external impact can be lowered.

A groove 31 may be located between the first upper body 10 and the second upper body 20, and may extend long in the front-rear direction. The groove 31 may be a curved surface concave downward. The groove 31 may include a first side 31a connected to a lower side of the first inner panel 121 and a second side 31b connected to a lower side of the second inner panel 221. The groove 31 may define a boundary of the space S together with the first inner panel 121 and the second inner panel 221. Meanwhile, the groove 31 may be referred to as a connection groove or a connection surface.

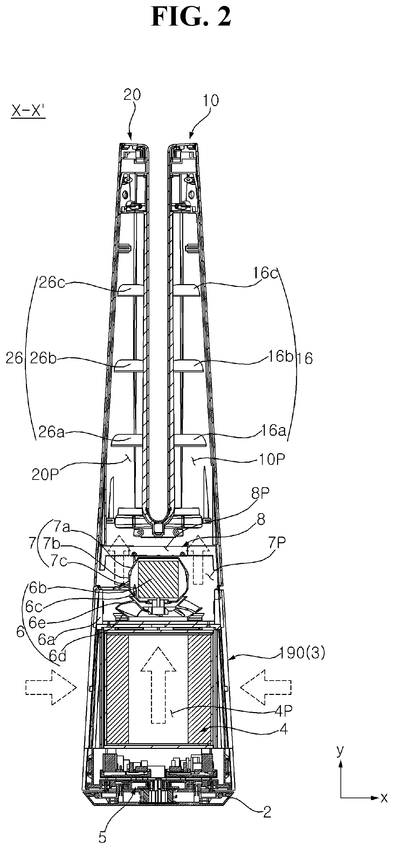

Referring to FIG. 2, the lower body 3 may provide an internal space in which a filter 4, a controller 5, a fan 6, and an air guide 7 described later are installed.

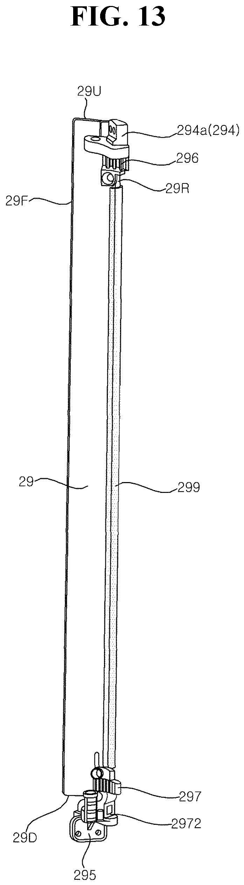

The filter 4 may be detachably installed in the inner space of the lower body 3. The filter 4 may be formed in a cylindrical shape as a whole. That is, the filter 4 may include a hole 4P formed through the filter 4 in the up-down direction. The filter 4 may include a ring-shaped lower frame 4a forming the lower end of the filter 4 and a ring-shaped upper frame 4b forming the upper end of the filter 4 (refer to FIG. 13). The indoor air may flow into the inside of the lower body 3 through the suction hole 3a (refer to FIG. 1) by the operation of the fan 6. In addition, the indoor air flowed into the inside of the lower body 3 may flow from the outer circumferential surface of the filter 4 to the inner circumferential surface and be purified, and may flow to the upper side of the filter 4 through the hole 4P.

The controller 5 may be installed in the inner space of the lower body 3. The controller 5 may be electrically connected to each component of the blower 1, and may control the operation of the blower 1.

The fan 6 is installed in the inner space of the lower body 3, and may be disposed in the upper side of the filter 4. By means of the fan 6, air may flow into the inside of the blower 1 to cause a flow of air discharged to the outside of the blower 1. The fan 6 may include a fan housing 6a, a fan motor 6b, a hub 6c, a shroud 6d, and a blade 6e. Meanwhile, the fan 6 may be referred to as a fan assembly or a fan module.

The fan housing 6a may form an outer shape of the fan 6. The fan housing 6a may have a cylindrical shape as a whole. A bell mouth 6f may be located in the lower end of the fan housing 6a. A suction port (unsigned) may be formed in the inner side of the bell mouth 6f, and may provide air to the shroud 6d described later.

The fan motor 6b may provide rotational force. The fan motor 6b may be a centrifugal fan or a mixed flow fan motor. The fan motor 6b may be supported by a motor cover 7b described later. In this case, the rotation shaft of the fan motor 6b may extend from the fan motor 6b to the lower side of the fan motor 6b, and may penetrate the lower surface of the motor cover 7b. The hub 6c may be fixed to the rotation shaft and rotate together with the rotation shaft. The shroud 6d may be spaced from the hub 6c to the outer side of the hub 6c. A plurality of blades 6e may be disposed between the hub 6c and the shroud 6d.

Accordingly, when the fan motor 6b is driven, air may flow in the axial direction of the fan motor 6b through the suction port, and may be discharged in the radial direction of the fan motor 6b and to the upper side thereof.

The air guide 7 may be disposed in the upper side of the fan 6, i.e., downstream of the fan 6, and may provide a flow path 7P through which air discharged from the fan 6 flows. For example, the flow path 7P may be an annular flow path. The air guide 7 may include a guide body 7a, a motor cover 7b, and a vane 7c. Meanwhile, the air guide 7 may be referred to as a diffuser.

The guide body 7a may form the outer shape of the air guide 7. The motor cover 7b may be disposed in the central portion of the air guide 7. For example, the guide body 7a may be formed in a cylindrical shape. In addition, the motor cover 7b may be formed in a bowl shape. In this case, the aforementioned annular flow path 7P may be formed between the guide body 7a and the motor cover 7b. The plurality of vanes 7c may be disposed in the annular flow path 7P, and may be spaced apart from each other in the circumferential direction of the guide body 7a. Each of the plurality of vanes 7c may extend from the outer surface of the motor cover 7b to the inner circumferential surface of the guide body 7a. Accordingly, the plurality of vanes 7c may guide the air provided from the fan 6 to the flow path 7P to the upper side of the air guide 7.

A distribution unit 8 may be disposed between the air guide 7 and the upper body 10, 20. The distribution unit 8 may provide a flow path 8P through which the air passing through the air guide 7 flows. The air passing through the air guide 7 may be distributed to the first upper body 10 and the second upper body 20 through the distribution unit 8. Meanwhile, the distribution unit 8 may be referred to as a splitter, a middle body, an inner body, a tower base, or a nozzle tower base.

The first upper body 10 may provide a first flow path 10P through which a portion of the air that has passed through the air guide 7 and the distribution unit 8 flows. The first flow path 10P may be formed in the inner space of the first upper body 10. The second upper body 20 may provide a second flow path 20P through which the remainder of the air that has passed through the air guide 7 and the distribution unit 8 flows. The second flow path 20P may be formed in the inner space of the second upper body 20. That is, the first flow path 10P and the second flow path 20P may communicate with the flow path 8P of the distribution unit 8 and the flow path 7P of the air guide 7.

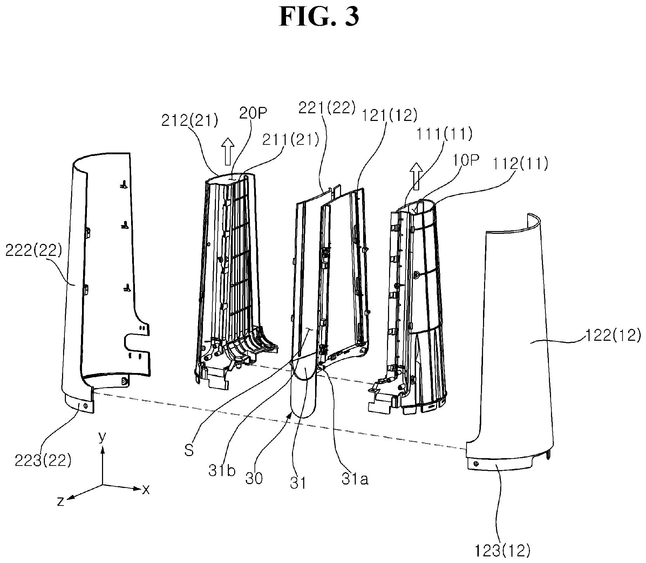

Referring to FIGS. 1 and 3, the first upper body 10 may include a first wall 11, in addition to the first inner panel 121 and the first outer panel 122 described above. The first wall 11 may be located between the first inner panel 121 and the first outer panel 122. That is, the first panel 12 may surround the first wall 11. The first wall 11 may include a first inner wall 111 facing the inner side of the first inner panel 121 and a first outer wall 112 facing the inner side of the first outer panel 122.

The first inner wall 111 may be detachably coupled to the inner side of the first inner panel 121. The first outer wall 112 may be detachably coupled to the inner side of the first outer panel 122. The first inner wall 111 and the first outer wall 112 may be coupled to each other, and form a first flow path 10P. In addition, the first inner panel 121 may be coupled to or fixed to a groove body 30 having the groove 31.

Accordingly, the first panel 12 may form a surface of the first upper body 10, and the first wall 11 may provide a first flow path 10P through which air flows.

The second upper body 20 may include a second wall 21, in addition to the second inner panel 221 and the second outer panel 222 described above. The second wall 21 may be located between the second inner panel 221 and the second outer panel 222. That is, the second panel 22 may surround the second wall 21. The second wall 21 may include a second inner wall 211 facing the inner side of the second inner panel 221 and a second outer wall 212 facing the inner side of the second outer panel 222.

The second inner wall 211 may be detachably coupled to the inner side of the second inner panel 221. The second outer wall 212 may be detachably coupled to the inner side of the second outer panel 222. The second inner wall 211 and the second outer wall 212 may be coupled to each other, and form a second flow path 20P. In addition, the second inner panel 221 may be coupled to or fixed to the groove body 30 having the groove 31.

Accordingly, the second panel 22 may form a surface of the second upper body 20, and the second wall 21 may provide a second flow path 20P through which air flows.

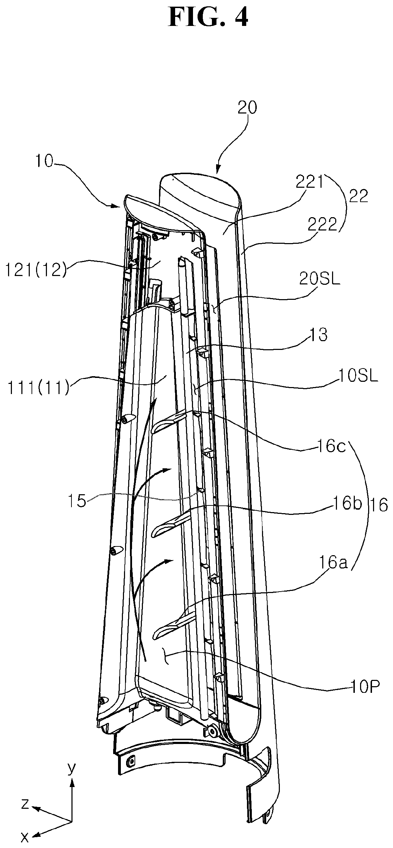

Referring to FIG. 4, a first vane 16 may be installed in the first flow path 10P. The first vane 16 may be coupled to the inner side of the first wall 11. For example, the first vane 16 may be located between the first inner wall 111 and the first outer wall 112 (refer to FIG. 3), and the right end of the first vane 16 may be coupled or fixed to the inner surface of the first inner wall 111.

The first vane 16 may be adjacent to a first slit 10SL of the first upper body 10 described later. The first vane 16 may have a convex shape. The rear end of the first vane 16 may be located in the upper side of the front end of the first vane 16. For example, the first vane 16 may include a plurality of first vanes 16a, 16b, and 16c spaced apart from each other in the up-down direction.

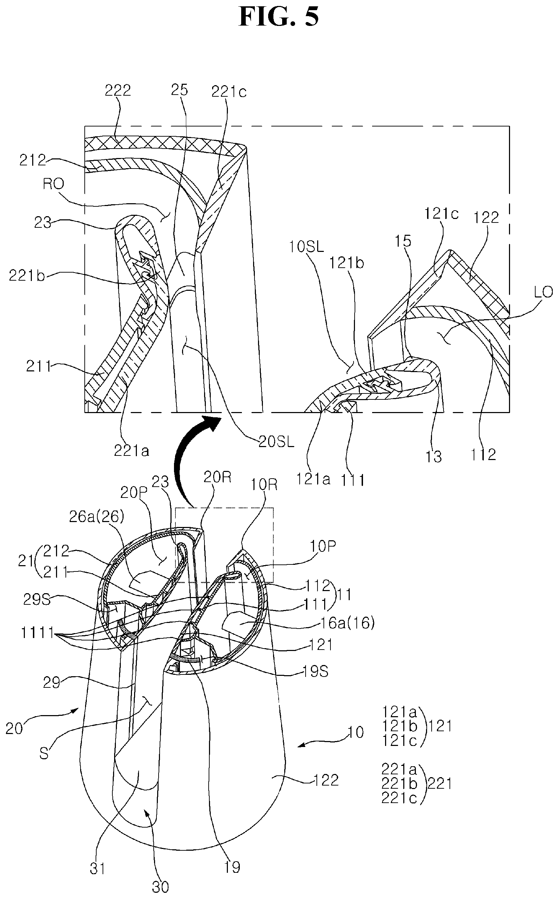

Meanwhile, a second vane 26a may be installed in the second flow path 20P, and the above-described contents may be identically applied to the first vane 16 (refer to FIG. 5).

Accordingly, the first vane 16 may smoothly guide the air rising in the first flow path 10P in the rearward direction. In addition, the second vane 16 may smoothly guide the air rising in the second flow path 20P in the rearward direction.

Referring to FIG. 5, a first connecting member 13 may be located in the first flow path 10P, and the rear end of the first vane 16 may be connected thereto.

The first connecting member 13 may extend from the first inner wall 111 to be inclined to the left toward the rearward direction. In addition, the first connecting member 13 may be adjacent to the first rear end 10R of the first upper body 10, and may be spaced apart from the first outer wall 112. In this case, a portion of a first opening LO may be located between the first connecting member 13 and the first outer wall 112, and may be inclined to the right toward the forward direction. Here, the first opening LO may communicate with the first flow path 10P. Meanwhile, the first opening LO may be referred to as a first discharge port or a first mouse.

Accordingly, the air flowing through the first flow path 10P may be guided in the rearward direction by the first vane 16, and may flow into an inlet of the first opening LO.

The first slit 10SL may be adjacent to the first rear end 10R of the first upper body 10, and may be formed through the first inner panel 121. The first slit 10SL may extend long along the first rear end 10R of the first upper body 10. The first slit 10SL may be an outlet of the first opening LO. Accordingly, the first slit 10SL may discharge the air flowing through the first flow path 10P to the space S. Meanwhile, the first slit 10SL may be referred to as a first discharge hole.

A second connecting member 23 may be located in the second flow path 20P, and the rear end of the second vane 26 may be connected thereto.

The second connecting member 23 may extend from the second inner wall 211 to be inclined to the right toward the rearward direction. In addition, the second connecting member 23 may be adjacent to the second rear end 20R of the second upper body 20, and may be spaced apart from the second outer wall 212. In this case, a portion of a second opening RO may be located between the second connecting member 23 and the second outer wall 212, and may be inclined to the left toward the forward direction. Here, the second opening RO may communicate with the second flow path 20P. Meanwhile, the second opening RO may be referred to as a second discharge port or a second mouse.

Accordingly, the air flowing through the second flow path 20P may be guided in the rearward direction by the second vane 26 and may flow into the inlet of the second opening RO.

A second slit 20SL may be adjacent to the second rear end 20R of the second upper body 20, and may be formed to penetrate the second inner panel 221. The second slit 20SL may extend long along the second rear end 20R of the second upper body 20. The second slit 20SL may be an outlet of the second opening RO. Accordingly, the second slit 20SL may discharge the air flowing through the second flow path 20P to the space S. Meanwhile, the second slit 20SL may be referred to as a second discharge hole.

For example, the first connecting member 13 and the second connecting member 23 may be symmetrical left and right, and the first slit 10SL and the second slit 20SL may face each other. In this case, the first opening LO may be inclined or bent in the forward direction of the second slit 20SL. In addition, the second opening RO may be inclined or bent in the forward direction of the first slit 10SL. Meanwhile, the first slit 10SL and the second slit 20SL may be hidden from a user's gaze looking from the forward direction to the rearward direction of the blower 1 (refer to FIG. 1).

A first slot 10H (refer to FIG. 1) may be adjacent to the first front end 10F of the first upper body 10, and may be formed to penetrate the first inner panel 121. The first slot 10H may be formed to extend long along the first front end 10F. A first damper 19 may be installed in a first space 19S and may extend long along the first slot 10H. The first damper 19 may have an arc-shaped lateral cross-section. A first moving assembly (not shown) may be installed in the first space 19S and may move the first damper 19 in the circumferential direction of the first damper 19. Accordingly, the first damper 19 may close the first slot 10H and may pass through the first slot 10H.

A second slot 20H (refer to FIG. 1) may be adjacent to the second front end 20F of the second upper body 20 and may be formed to penetrate the second inner panel 221. A second slot 20H may be formed to extend long along the second front end 20F. A second damper 29 may be installed in a second space 29S and may extend long along the second slot 20H. The second damper 29 may have an arc-shaped lateral cross-section. A second moving assembly (not shown) may be installed in the second space 29S, and may move the second damper 29 in the circumferential direction of the second damper 29. Accordingly, the second damper 29 may close the second slot 20H, and may pass through the second slot 20H.

For example, the second damper 29 may be symmetrical with the first damper 19. In addition, the second moving assembly may be symmetrical with the first moving assembly.

For example, the first or second moving assembly may have a rack-pinion coupling structure, a pulley-belt coupling structure, a link coupling structure, or the like that can transmit the rotational force of electric motor to the first or second damper 19, 29. For another example, the first or second moving assembly may have a connecting structure, or the like that can transmit the driving force of actuator to the first or second damper 19, 29.

Meanwhile, the second slot 20H, the second damper 29 and the second moving assembly may be omitted. In this case, the first damper 19 may move toward or away from the second upper body 20. For example, a distal end of the first damper 19 at a first position may be adjacent to or parallel to the surface of the first inner panel 121. For example, a distal end of the first damper 19 at a second position may be adjacent to or in contact with the second inner panel 221 of the second upper body 20. The first damper 19 may move between the first position and the second position.

Alternatively, the first slot 10H, the first damper 19 and the first moving assembly may be omitted. In this case, the second damper 29 may move toward or away from the first upper body 10. For example, a distal end of the second damper 29 at a first position may be adjacent to or parallel to the surface of the second inner panel 221 of the second upper body 20. For example, a distal end of the second damper 29 at a second position may be adjacent to or in contact with the first inner panel 121 of the first upper body 10. The second damper 29 may move between the first position and the second position.

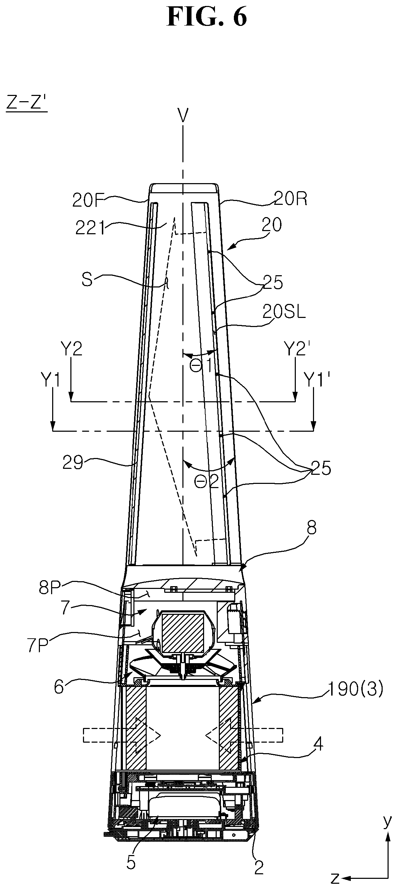

Referring to FIGS. 5 and 6, the second slit 20SL may discharge air flowing through the second flow path 20P into the space S. The second slit 20SL may be formed adjacent to the second rear end 20R of the second upper body 20, and penetrate the second inner panel 221. The second slit 20SL may extend long along the second rear end 20R. In this case, the second slit 20SL may be inclined at a certain angle (acute angle) in a forward direction with respect to a vertical line V extending in the up-down direction.

For example, the second slit 20SL may be parallel to the second rear end 20R. As another example, the second slit 20SL may not be parallel to the second rear end 20R. In this case, the second slit 20SL may be inclined at a first angle (theta 1, e.g. 4 degrees) with respect to the vertical line V, and the second rear end 20R may be inclined at a second angle (theta 2, e.g. 3 degrees) smaller than the first angle (theta 1) with respect to the vertical line V.

Meanwhile, the first slit 10SL and the second slit 20SL may be symmetrical while facing each other in the left-right direction.

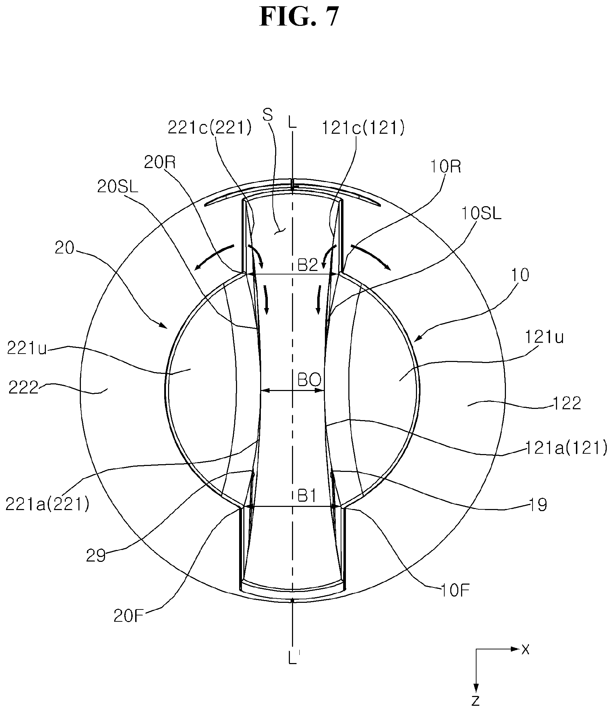

Referring to FIG. 7, the first inner panel 121 and the second inner panel 221 may face each other, and form left and right boundaries of the space S. A gap between the first inner panel 121 and the second inner panel 221 may decrease as it progresses from the rearward direction to the forward direction and then increase again. The gap may be the width of the space S.

A first gap B1 may be defined as a gap between the first front end 10F of the first upper body 10 and the second front end 20F of the second upper body 20. A second gap B2 may be defined as a gap between the first rear end 10R of the first upper body 10 and the second rear end 20R of the second upper body 20. The second gap B2 may be the same as or different from the first gap G1. A reference gap B0 may be the smallest of the gaps between the first inner panel 121 and the second inner panel 221.

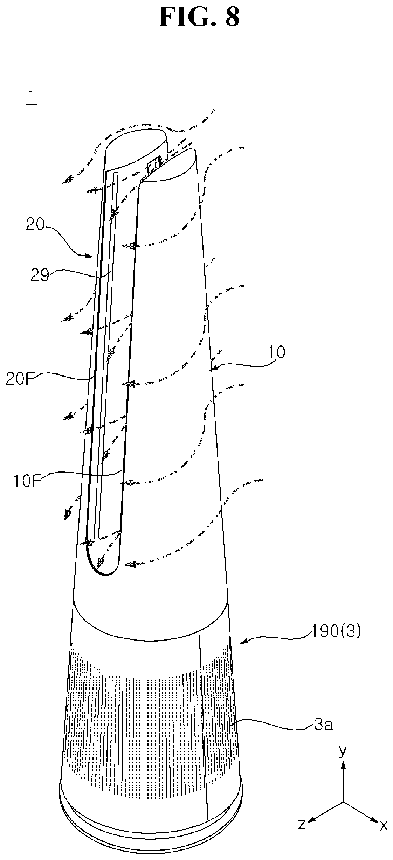

Referring to FIGS. 7 and 8, in the first state of the blower 1, the distal end of the first damper 19 can be inserted or hidden in the first slot 10H, and the distal end of the second damper 29 may be inserted or hidden in the second slot 20H. In this case, the distal end of the first damper 19 may form a surface continuous with the surface of the first inner panel 121, and the distal end of the second damper 29 may form a surface continuous with the surface of the second inner panel 221. Meanwhile, the distal end of the first damper 19 may be inserted or hidden in the first slot 10H, the second damper 29 may be omitted, and the second slot 20H may be closed. Alternatively, the distal end of the second damper 29 may be inserted or hidden in the second slot 20H, the first damper 19 may be omitted, and the first slot 10H may be closed

Air may be discharged from the first slit 10SL and the second slit 20SL to the space S, in response to the operation of the fan 6 (refer to FIG. 2). In addition, the air discharged to the space S may flow in the forward direction along the surface of the first inner panel 121 and the surface of the second inner panel 221.

This air flow may form an air current that allows the air around the upper body 10, 20 to be entrained into the space S or to move in the forward direction along the surface of the first outer panel 122 and the surface of the second outer panel 222.

Accordingly, the blower 1 can provide an air current of abundant airflow to a user or the like.

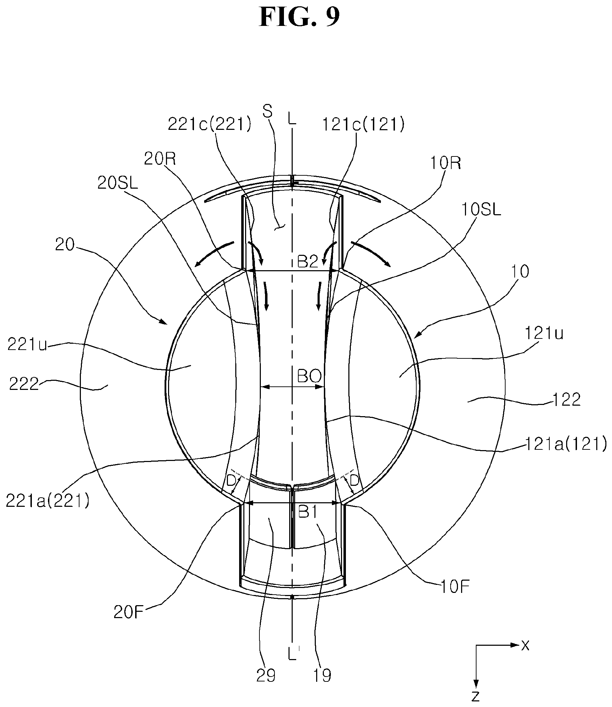

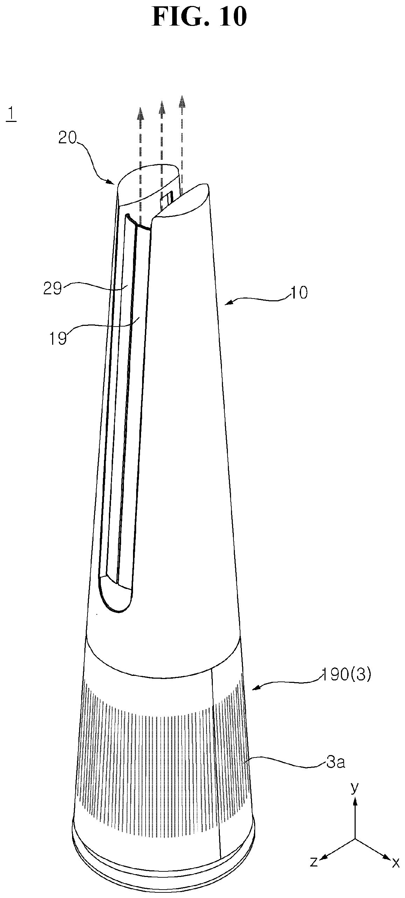

Referring to FIGS. 9 and 10, in the second state of the blower 1, a portion of the first damper 19 may pass through the first slot 10H and may be located in the space S, and a portion of the second damper 29 may pass through the second slot 20H and may be located in the space S. In this case, the distal end of the first damper 19 and the distal end of the second damper 29 may be in contact with or adjacent to each other. Meanwhile, a part of the first damper 19 may be positioned in the space S through the first slot 10H, the second damper 29 may be omitted, and the second slot 20H may be closed. Alternatively, a part of the second damper 29 may be positioned in the space S through the second slot 20H, the first damper 19 may be omitted, and the first slot 10H may be closed.

Air may be discharged from the first slit 10SL and the second slit 20SL into the space S, in response to the operation of the fan 6 (refer to FIG. 2). Then, the air discharged into the space S may flow in the forward direction along the surface of the first inner panel 121 and the surface of the second inner panel 221, and then may be obstructed by the first damper 19 and the second damper 29 and may ascend upwards.

Accordingly, the blower 1 may provide an upward airflow, and may circulate air in the indoor space in which the blower 1 is installed.

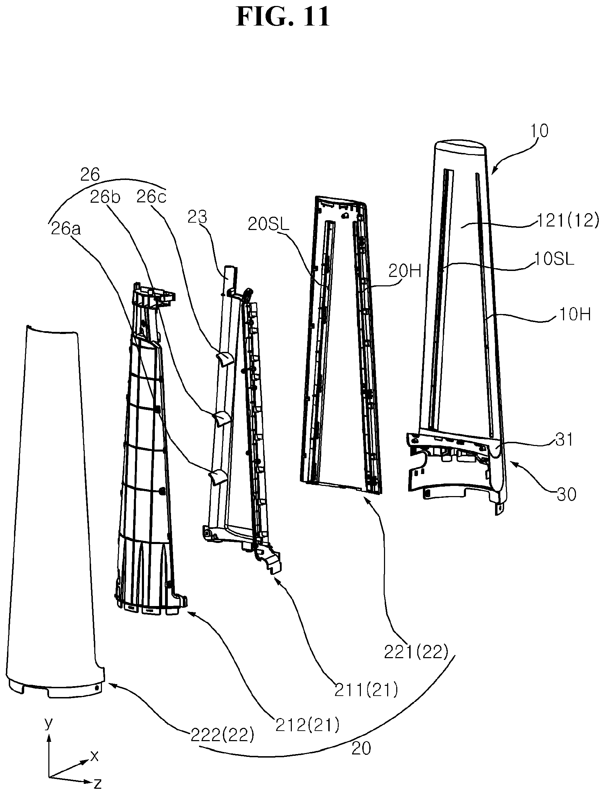

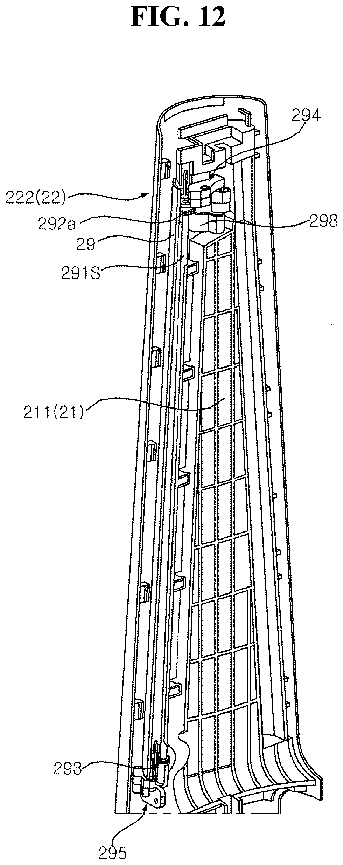

Referring to FIGS. 11 and 12, the second damper 29 may extend long along the second slot 20H. The second damper 29 may be disposed in the second space 29S (refer to FIG. 5), which is a space between the second wall 21 and the second panel 22, and may penetrate the second slot 20H.

The description of the second damper 29 described above and below, the configuration for moving the second damper 29, and the configuration coupled with the second damper 29 may be identically applied to the first damper 19 (refer to FIG. 5), the configuration for moving the first damper 19, and the configuration coupled with the first damper 19.

Referring to FIG. 13, the length of the second damper 29 may be greater than the width of the second damper 29. For example, the length of the second damper 29 may be approximately 15 times greater than the width of the second damper 29.

An upper end 29U of the second damper 29 may be referred to as a first short side, and a lower end 29D of the second damper 29 may be referred to as a second short side. A front end 29F of the second damper 29 may be referred to as a first long side, and a rear end 29R of the second damper 29 may be referred to as a second long side.

At this time, in the second state of the blower 1 described above with reference to FIGS. 9 and 10, the front end 29F of the second damper 29 may contact the front end of the first damper 19.

An upper holder 296 may be adjacent to the upper end 29U and the rear end 29R of the second damper 29, and may be fixed to the inner surface of the second damper 29. A lower holder 297 may be adjacent to the lower end 29D and the rear end 29R of the second damper 29, and may be fixed to the inner surface of the second damper 29.

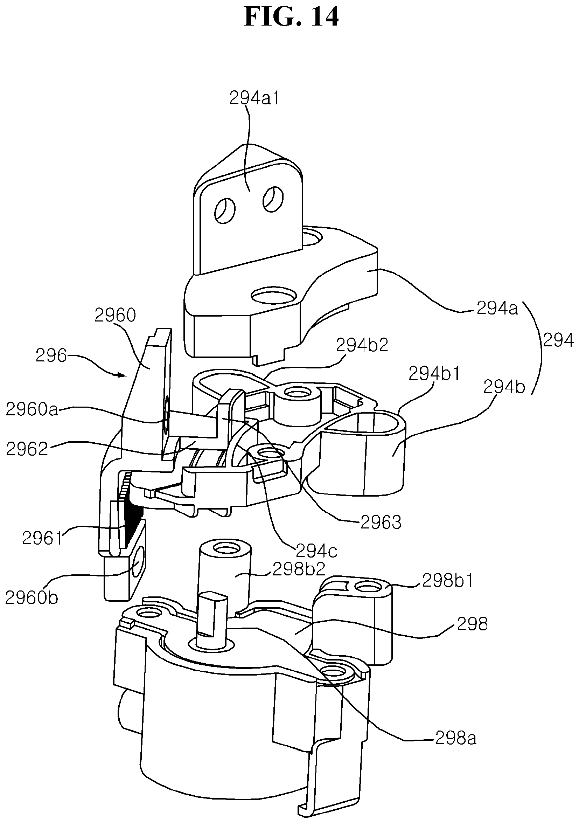

Referring to FIG. 14, the upper holder 296 may include an upper fixing portion 2960, an upper rack 2961, an upper horizontal rib 2962, and an upper vertical rib 2963.

Upper fixing hole 2960a, 2960b may be formed to penetrate the upper fixing portion 2960. A fastening member such as a screw may penetrate the upper fixing hole 2960a, 2960b to be fastened to the inner surface of the second damper 29 (refer to FIG. 13).

The upper rack 2961 may be formed on the inner surface of the upper fixing portion 2960. The upper rack 2961 may be located between a first upper fixing hole 2960a and a second upper fixing hole 2960b. The upper rack 2961 may be bent along the curvature of the second damper 29 (refer to FIG. 5).

The upper horizontal rib 2962 may protrude from the inner surface of the upper fixing portion 2960 in a horizontal direction. The upper horizontal rib 2962 may be located in the upper side of the upper rack 2961.

The upper vertical rib 2963 may extend upwardly from the distal end of upper horizontal rib 2962. The upper vertical rib 2963 may be bent along the curvature of the upper rack 2961.

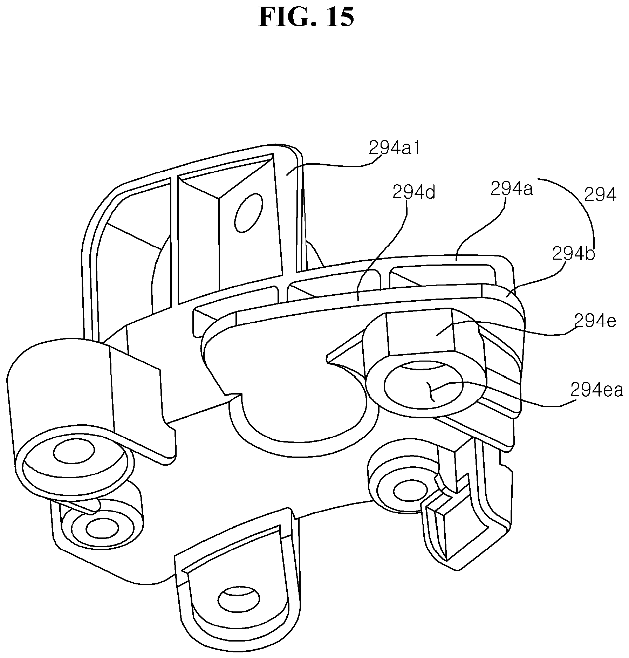

Referring to FIGS. 14 and 15, the upper guide 294 may include a first upper guide 294a and a second upper guide 294b.

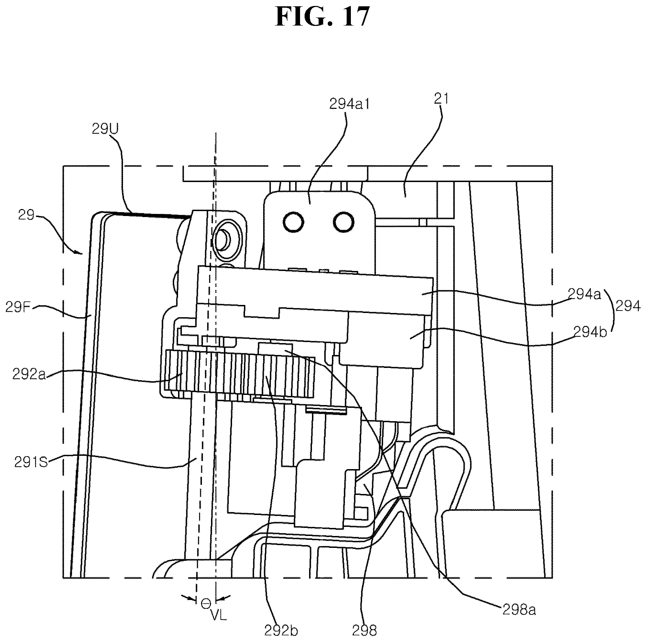

A mount 294a1 of the first upper guide 294a may be fixed to the outer surface of the second wall 21 in the second space 29S (refer to FIG. 5) (refer to FIG. 17). For example, an upper guide groove (not shown) may be formed on the lower surface of the first upper guide 294a, and may guide the movement of the upper vertical rib 2963.

The second upper guide 294b may face the first upper guide 294a with respect to the upper vertical rib 2963. The second upper guide 294b may be detachably coupled to the first upper guide 294a. For example, the upper guide rib 294c may be formed on the upper surface of the second upper guide 294b, and may guide the movement of the upper vertical rib 2963. In this case, the upper guide rib 294c may be bent along the curvature of the upper vertical rib 2963. In addition, the second upper guide 294b may include a plate 294d supporting the lower surface of the upper horizontal rib 2962.

Meanwhile, a first shaft holder 294e may protrude downward from the lower surface of the second upper guide 294b. A first hole 294ea may be formed inside the first shaft holder 294e.

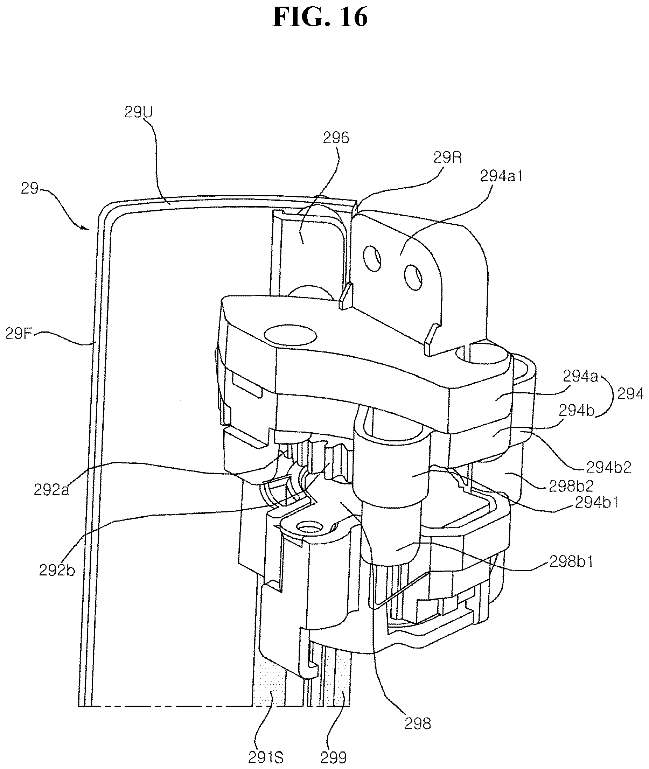

Referring to FIGS. 16 and 17, a motor 298 may be coupled to the second upper guide 294b from the lower side of the second upper guide 294b. For example, a first coupling portion 294b1, 249b2 may be formed in one side of the second upper guide 294b, and a second coupling portion 298b1, 283b2 may be formed in one side of the motor 298. In this case, the second coupling portion 298b1, 283b2 may be coupled to the first coupling portion 294b1, 249b2.

In addition, a rotation shaft 298a of the motor 298 may protrude toward the second upper guide 294b from the upper surface of the motor 298. A driving gear 292b may be fixed to the rotation shaft 298a. A first pinion 292a may be engaged with the driving gear 292b and may be fixed to the outer circumferential surface of a shaft 291S adjacent to the upper end of the shaft 291S. In addition, the first pinion 292a may be engaged with the upper rack 2961 (refer to FIG. 14). Here, the shaft 291S may extend long along the second damper 29. The upper end of the shaft 291S may be inserted into the first hole 294ea (refer to FIG. 15), and may be rotatably coupled to the first shaft holder 294e (refer to FIG. 15).

In this case, the longitudinal axis of the second damper 29, the longitudinal axis of the shaft 291S, the rotation center axis of the first pinion 292a, the rotation center axis of the driving gear 292b, and the rotation shaft 298a may be parallel to each other. For example, the longitudinal axis of the shaft 291S may be inclined by a certain angle (theta) (acute angle) with respect to the vertical line VL. The angle (theta) may be substantially equal to the angle between the vertical line VL and the second slot 20H (refer to FIG. 1).

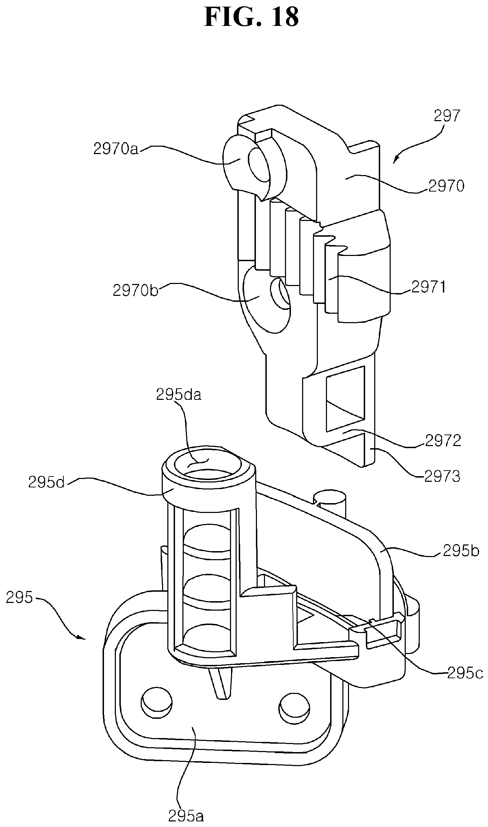

Referring to FIG. 18, the lower holder 297 may include a lower fixing portion 2970, a lower rack 2971, a lower horizontal rib 2972, and a lower vertical rib 2973.

A lower fixing hole 2970a, 2970b may be formed to penetrate the lower fixing portion 2970. A fastening member such as a screw may penetrate the lower fixing hole 2970a, 2970b to be fastened to the inner surface of the second damper 29 (refer to FIG. 13).

The lower rack 2971 may be formed on the inner surface of the lower fixing portion 2970. The lower rack 2971 may be located between a first lower fixing hole 2970a and a second lower fixing hole 2970b. The lower rack 2971 may be bent along the curvature of the second damper 29 (refer to FIG. 5).

The lower horizontal rib 2972 may protrude from the inner surface of the lower fixing portion 2970 in the horizontal direction. The lower horizontal rib 2972 may be located in the lower side of the lower rack 2971.

The lower vertical rib 2973 may extend downward from the lower end of the lower fixing portion 2970 and may intersect the lower horizontal rib 2972. The lower vertical rib 2973 may be bent along the curvature of the lower rack 2971.

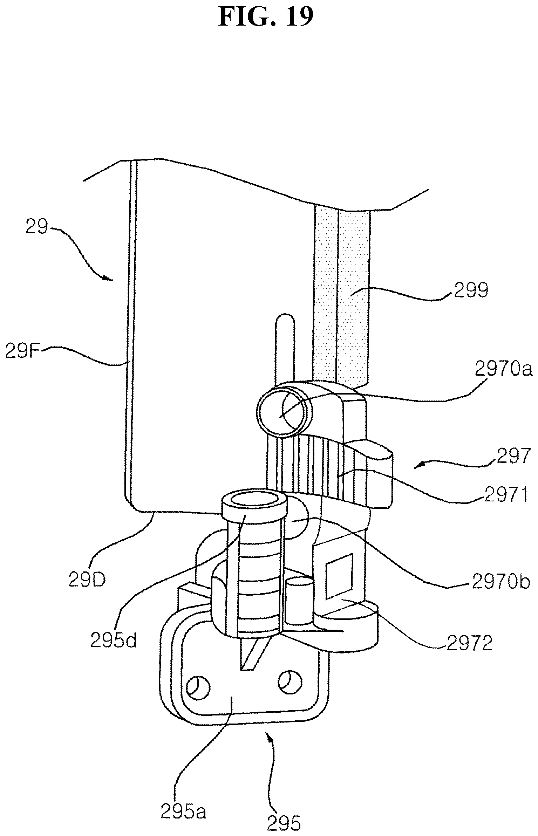

Referring to FIGS. 18 and 19, the lower guide 295 may be coupled to the lower holder 297 from the lower side of the lower holder 297.

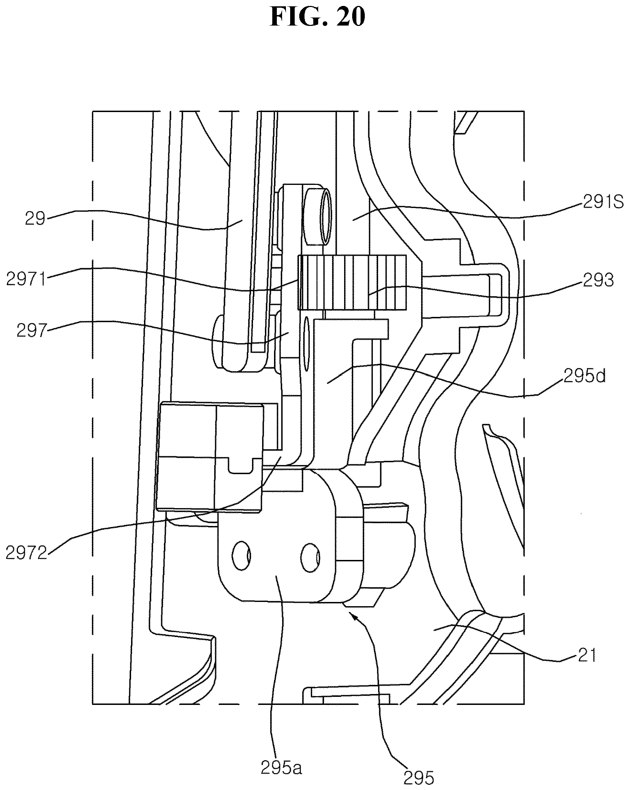

The mount 295a of the lower guide 295 may be fixed to the outer surface of the second wall 21 (refer to FIG. 20) in the second space 29S (refer to FIG. 5). For example, a lower guide groove 295c may be formed on the upper surface of the lower guide 295, and may guide the movement of the lower vertical rib 2973. In this case, the lower guide groove 295c may be bent along the curvature of the lower vertical rib 2973. In addition, a portion of the lower guide 295 may support the lower surface of the lower horizontal rib 2972.

Meanwhile, a second shaft holder 295d may protrude upward from the upper surface of the lower guide 295. A second hole 295da may be formed inside the second shaft holder 295d.

Referring to FIGS. 19 and 20, the lower end of the shaft 291S may be inserted into the second hole 295da, and may be rotatably coupled to the second shaft holder 295d. A second pinion 293 may be fixed to the outer circumferential surface of the shaft 291S adjacent to the lower end of the shaft 291S. In addition, the second pinion 293 may be engaged with the lower rack 2971.

In this case, the rotation center axis of the second pinion 293 may be coaxial with the longitudinal axis of the shaft 291S.

Accordingly, when the motor 298 (refer to FIG. 17) is driven, the second damper 29 can move between a first state (refer to FIGS. 7 and 8) and a second state (refer to FIGS. 9 and 10) of the blower. Likewise, the first damper 19 may also be movable between the first state (refer to FIGS. 7 and 8) and the second state (refer to FIGS. 9 and 10) of the blower.

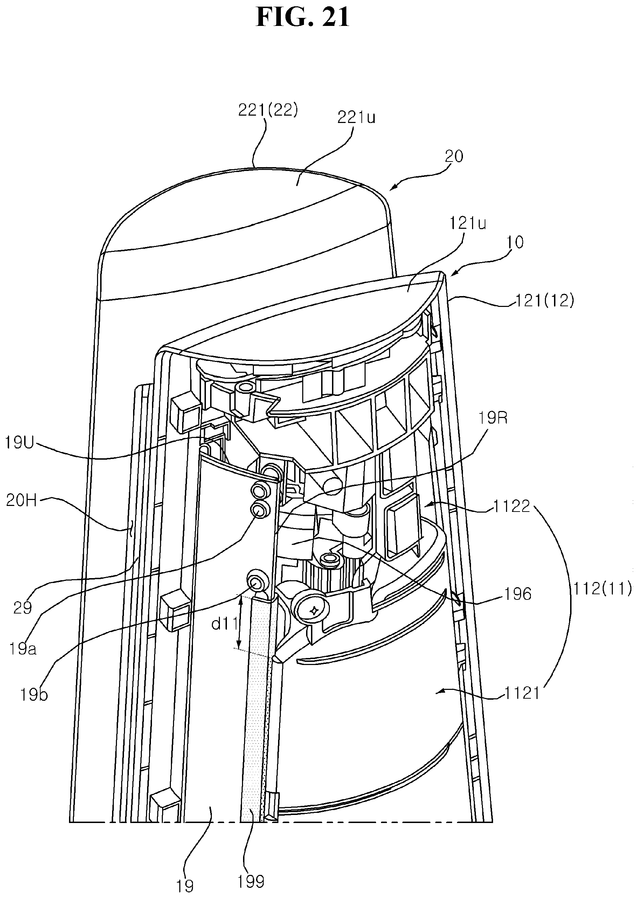

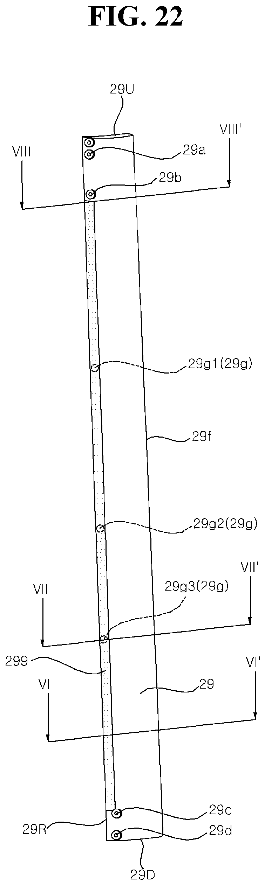

Referring to FIGS. 21 and 22, the second damper 29 may include an upper boss 29a, 29b and a lower boss 29c, 29d.

The upper boss 29a, 29b may be adjacent to the upper end 29U and the rear end 29R of the second damper 29, and may be formed on the inner surface and/or outer surface of the second damper 29. A first upper boss 29a may be aligned with the first upper fixing hole 2960a (refer to FIG. 14) of the upper fixing portion 2960. A second upper boss 29b may be aligned with the second upper fixing hole 2960b (refer to FIG. 14) of the upper fixing portion 2960. That is, the fastening member such as a screw may be fastened to the upper boss 29a, 29b by penetrating the upper fixing hole 2960a, 2960b (refer to FIG. 14).

The lower boss 29c, 29d may be adjacent to the lower end 29D and the rear end 29R of the second damper 29, and may be formed on the inner surface and/or outer surface of the second damper 29. The first lower boss 29c may be aligned with the first lower fixing hole 2970a (refer to FIG. 18) of the lower fixing portion 2970. The second lower boss 29d may be aligned with the second lower fixing hole 2970b (refer to FIG. 18) of the lower fixing portion 2970. That is, the fastening member such as a screw may be fastened to the lower boss 29c, 29d by penetrating the lower fixing hole 2970a, 2970b (refer to FIG. 18).

According to the invention, the bar extends long along the rear end 29R of the second damper 29. The bar 299 is detachably coupled to the rear end 29R of the second damper 29. For example, the second damper 29 may include a resin material. For example, the bar 299 may include a metal material such as iron Fe or aluminum Al. Accordingly, the bar 299 improves the rigidity of the second damper 29.

A portion corresponding to the upper boss 29a, 29b of the second damper 29 may have improved rigidity by the upper holder 296 (refer to FIG. 13). A portion of the second damper 29 corresponding to the lower boss 29c, 29d may have improved rigidity by the lower holder 297 (refer to FIG. 13). In this case, the upper end of the bar 299 may be adjacent to the upper boss 29a, 29b, and the lower end of the bar 299 may be adjacent to the lower boss 29c, 29d. That is, a portion located between the upper boss 29a, 29b and the lower boss 29c, 29d of the second damper 29 may have improved rigidity by the bar 299.

Accordingly, the rigidity of the second damper 29 is improved as a whole. Meanwhile, the bar 299 may be referred to as an edge cover, a strip, or a reinforcement part.

Referring back to FIGS. 3 and 21, the first outer wall 112 may include a first base wall 1121 and a first mount wall 1122. The first base wall 1121 may face the first inner wall 111 and form a boundary of the first flow path 10P. The first mount wall 1122 may extend upwardly from the first base wall 1121, and may be adjacent to the upper holder 196.

In this case, the upper end of the bar 199 fixed to the rear end 19R of the first damper 19 may be located in the upper side of the first base wall 1121 (refer to d11 of FIG. 21). Accordingly, the bar 199 may improve the rigidity of other portion of the first damper 19 as well as a portion corresponding to the first flow path 10P of the first damper 19 (i.e., a portion located in the flow path of the air that is discharged from the first slit 10SL (refer to FIG. 4) and passes through the space S).

Meanwhile, the above description may be identically applied to the second damper 29 and the bar 299 coupled thereto. Alternatively, any one of a first damper assembly including the first damper 19 and the bar 199 and a second damper assembly including the second damper 29 and the bar 299 may be omitted

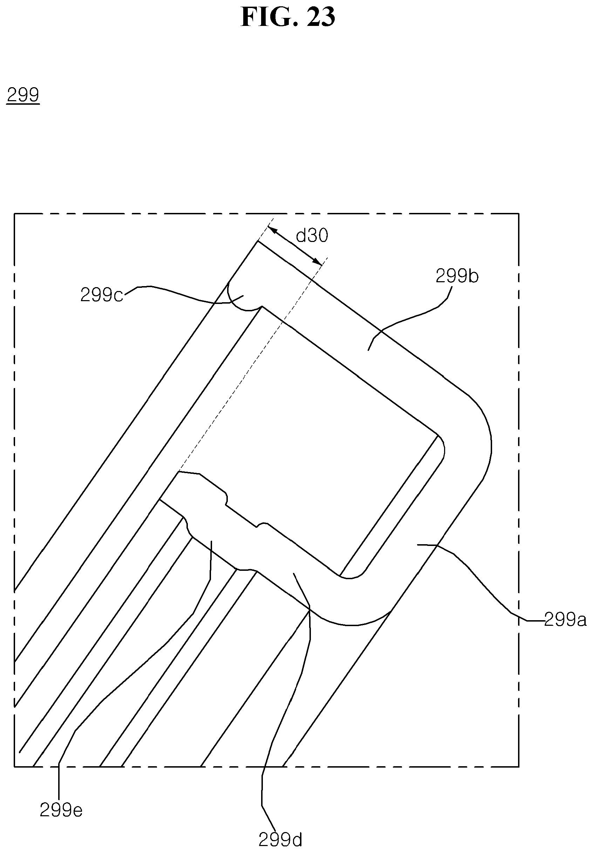

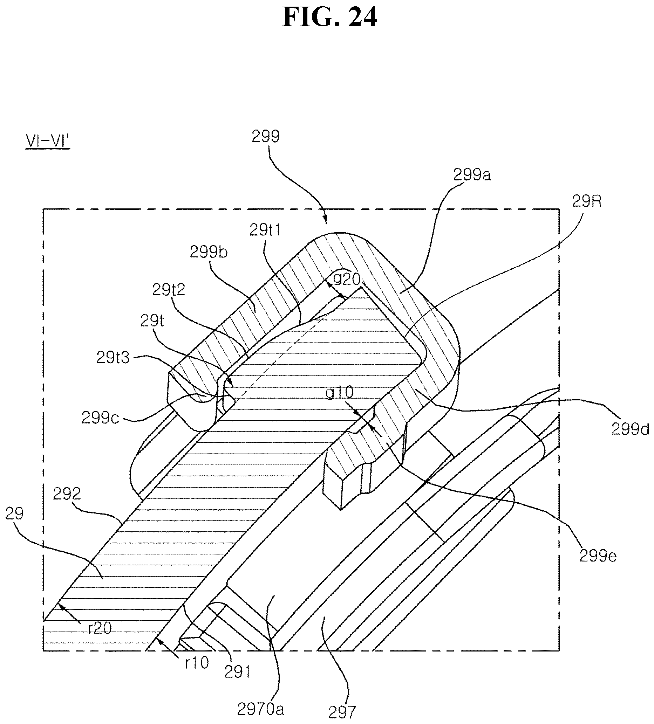

Referring to FIGS. 23 and 24, the second damper 29 may be curved. The radius of curvature r20 of the outer surface 292 of the second damper 29 may be greater than the radius of curvature r10 of the inner surface 291 of the second damper 29. That is, the curvature of the outer surface 292 of the second damper 29 may be smaller than the curvature of the inner surface 291 of the second damper 29.

The bar 299 may have elasticity. The bar 299 includes a first part 299a, a second part 299b, and a third part 299d. The first part 299a may face the rear end 29R of the second damper 29. The second part 299b is bent from the first part 299a and may face the outer surface 292 of the second damper 29. The third part 299d is bent from the first part 299a and may face the inner surface 291 of the second damper 29. That is, a portion of the second damper 29 may be located between the second part 299b and the third part 299d.

In addition, the length of the second part 299b with respect to the first part 299a may be greater than the length of the third part 299d with respect to the first part 299a by a certain length d30. That is, in the thickness direction of the second damper 29, a portion of the second part 299b may overlap the third part 299d.

A protrusion 29t may protrude from the outer surface 292 of the second damper 29 toward the second part 299b, and may be adjacent to the rear end 29R of the second damper 29. The protrusion 29t may extend long in the length direction of the second damper 29. The protrusion 29t may be formed as one body with the second damper 29. The protrusion 29t may include an inclined portion 29t1, a horizontal portion 29t2, and a vertical portion 29t3. The inclined portion 29t1 may be formed to be inclined with respect to a boundary (refer to the dotted line in FIG. 24) between the protrusion 29t and the second damper 29. The horizontal portion 29t2 may be connected to the inclined portion 29t1 and may be formed parallel to the boundary. The vertical portion 29t3 may be connected to the horizontal portion 29t2 and may be formed perpendicular to the boundary.

A locking portion 299c may protrude toward the second damper 29 from the distal end of the second part 299b. In the process of coupling the bar 299 to the second damper 29, the locking portion 299c may be caught by the vertical portion 29t3 after sliding on the inclined portion 29t1 and the horizontal portion 29t2, and the third part 299d may contact the inner surface 291 of the second damper 29. In the process of separating the second damper 29 and the bar 299, the bar 299 may be opened, and the locking portion 299c may be released from the vertical portion 29t3.

According to the present invention, the bar 299 is detachably coupled to the second damper 29. For example, the distal end of the locking portion 299c may be formed to be rounded. In this case, the coupling and separation of the locking portion 299c with respect to the protruding portion 29t may be performed smoothly.

A rigid portion 299e may be formed while being pressed outwardly from the inner surface of the third part 299d. A first gap g10 may be formed between the inner surface 291 of the second damper 29 and the rigid portion 299e. The rigid portion 299e may improve the rigidity of the bar 299, and as a result, the rigidity of the second damper 29 may be improved. Meanwhile, in some embodiment, the bar 299 may further include a rigid portion formed in the first part 299a, the second part 299b, and/or the third part 299d in addition to the rigid portion 299e described above.

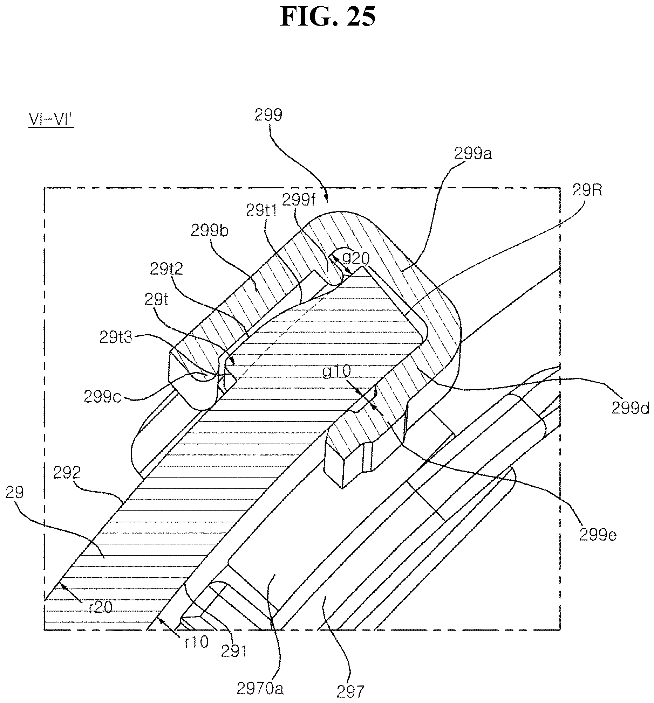

Referring to FIG. 25, a second gap g20 may be formed between the outer surface 292 of the second damper 29 and the second part 299b. An inner protrusion 299f may protrude from the inner surface of the second part 299b toward the outer surface 292 of the second damper 29, and may be located in the second gap g20. The distal end of the inner protrusion 299f may contact the outer surface 292 of the second damper 29, and may improve the rigidity of the second damper 29.

For example, the inner protrusion 299f may extend along the protrusion 29t. As another example, the inner protrusion 299f may include a plurality of inner protrusions spaced apart from each other in the length direction of the protrusion 29t.

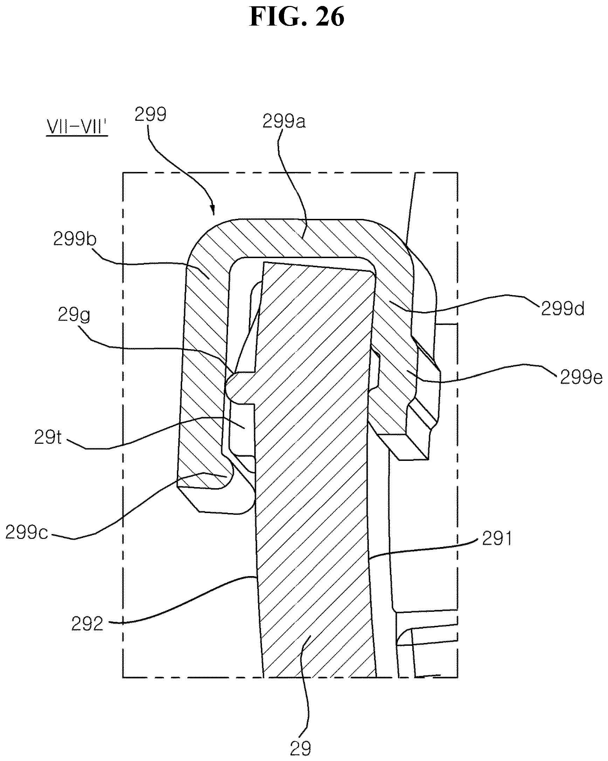

Referring to FIGS. 22 and 26, a pin 29g may be formed on the outer surface 292 of the second damper 29. For example, the pin 29g may include a plurality of pins 29g1, 29g2, and 29g3 spaced apart from each other in the length direction of the second damper 29. In this case, the protrusion 29t may include a plurality of protrusions spaced apart from each other with the pin 29g interposed therebetween. The second part 299b may cover the pin 29g. The pin 29g may be referred to as a gate.

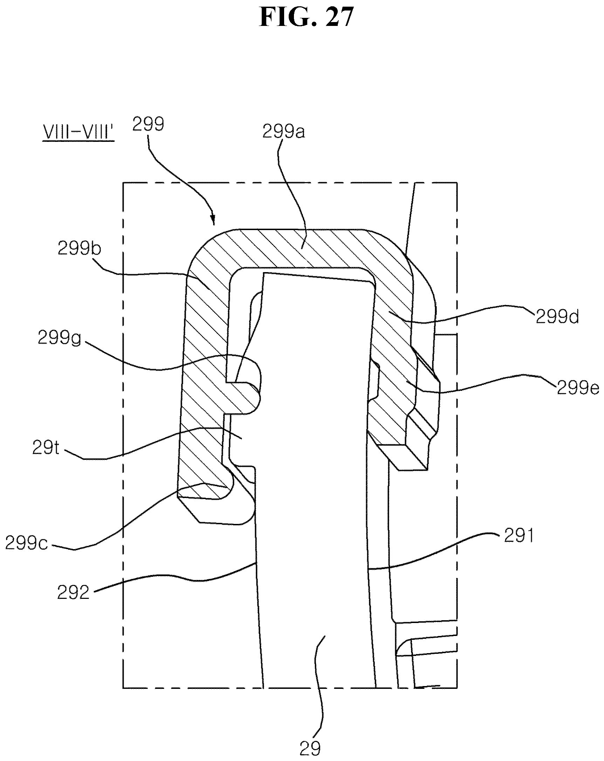

Referring to FIG. 27, the guide protrusion 299g may protrude from the inner surface of the second part 299b toward the third part 299d, and may be located in the upper end of the protrusion 29t.

Accordingly, the guide protrusion 299g may guide the coupling of the bar 299 to the second damper 29. That is, a user may couple the bar 299 to the second damper 29 while the guide protrusion 299t is in contact with the upper end of the protrusion 29t.

According to the invention and referring

to FIGS. 1 to 27, the blower includes:
a fan that generates a flow of air; a lower body that includes an internal space in which the fan is installed, and a suction hole providing air to the fan; a first upper body that is positioned above the lower body, communicates with the internal space of the lower body, and has a surface at which a first discharge hole is formed; a first damper that is movably coupled to the first upper body to selectively penetrate the surface of the first upper body, the first damper having a first end facing an outside of the first upper body, and a second end opposite to the first end; and a first bar extending along and coupled to the second end of the first damper.

The blower may further comprise a second upper body positioned above the lower body, communicating with the inner space of the lower body, and having one surface at which a second discharge hole is formed; and a space formed between the one surface of the first upper body and the one surface of the second upper body, wherein the first damper may be movable in a direction close to or away from the one surface of the second upper body.

The blower may further comprise a second damper penetrating the one surface of the second upper body and movably coupled to the second upper body, the second damper having one end facing the space and the other end opposite to the one end.

The blower may further comprise a second bar extending along the other end of the second damper and coupled to the other end of the second damper.

The first damper and the second damper may be symmetrical to each other with respect to the space.

A moving direction of the first damper may be opposite to a moving direction of the second damper, and the one end of the first damper may face the one end of the second damper in the moving direction of the first damper.

According to the invention, the first bar includes:
a first part facing the other end of the first damper; a second part bent at one end of the first part, and facing an outer surface of the first damper; and a third part bent at the other end of the first part, and facing an inner surface of the first damper, wherein a portion of the first damper may be positioned between the second part and the third part.

The first damper may have an arc-shaped cross-section and may be movable in a length direction of the arc, the first bar may have elasticity and the first bar is detachably coupled to the first damper.

A radius of curvature of the outer surface of the first damper may be greater than a radius of curvature of the inner surface of the first damper, wherein the first damper may include a protrusion protruding from the outer surface of the first damper toward the second part and adjacent to a rear end of the first damper, and wherein the first bar may further include a locking portion protruding toward the first damper from a distal end of the second part, and caught by the protrusion.

The protrusion may further include: an inclined portion inclined with respect to a boundary between the protrusion and the first damper; a horizontal portion connected to the inclined portion, and formed parallel to the boundary; and a vertical portion connected to the horizontal portion, formed perpendicular to the boundary, and by which the locking portion is caught.

A distal end of the locking portion may be formed to be round.

The first bar may further include a guide protrusion protruding from an inner surface of the second part toward the third part, and positioned on the protrusion.

The first damper may further include a plurality of pins formed at the outer surface of the first damper and spaced apart from each other in a length direction of the first damper, wherein the second part may cover the plurality of pins.

The first bar may further include a rigid portion which is formed while being pressed outward from an inner surface of the third part.

The first bar may further include an inner protrusion protruding from an inner surface of the second part toward the first damper, and in contact with the outer surface of the first damper.

The first damper may further include: an upper boss formed at an inner surface of the first damper, and adjacent to an upper end and the other end of the first damper; and a lower boss formed at the inner surface of the first damper, and adjacent to a lower end and the other end of the first damper; wherein an upper end of the first bar may be adjacent to the upper boss, and a lower end of the first bar may be adjacent to the lower boss.

The blower may further include a first moving assembly including an upper holder fastened to the upper boss and a lower holder fastened to the lower boss, wherein the first moving assembly may include: a motor providing power; a driving gear fixed to a rotation shaft of the motor; a first pinion engaged with the driving gear; a shaft to which the first pinion is fixed; and a second pinion fixed to the shaft, and spaced apart from the first pinion, wherein the upper holder may include an upper rack formed at the upper holder and engaged with the first pinion, wherein the lower holder may include a lower rack formed at the lower holder and engaged with the second pinion.

The first damper and the second damper may include a resin material, wherein the first bar and the second bar may include a metal material.

The effect of the blower according to the present disclosure and invention will be described as follows.

According to the present invention, a blower capable of adjusting the blowing direction is provided.

According to at least one of the embodiments of the present disclosure, a driving mechanism of the damper for controlling the blowing direction of the blower may be provided.

According to the present invention, a structure capable of improving the rigidity of the damper is provided.

According to the present invention, a bar that can be easily coupled to or detached from the damper is provided.

Certain embodiments or other embodiments of the invention described above are not mutually exclusive or distinct from each other. Any or all elements of the embodiments of the invention described above may be combined or combined with each other in configuration or function.

For example, a configuration "A" described in one embodiment of the invention and the drawings and a configuration "B" described in another embodiment of the invention and the drawings may be combined with each other. Namely, although the combination between the configurations is not directly described, the combination is possible except in the case where it is described that the combination is impossible.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure and the drawings. In addition to variations and modifications in the component parts and/or arrangements, alternative uses will also be apparent to those skilled in the art. A blower is only according to the present invention if it falls within the scope of protection defined by the claims and the independent claim in specific.

## Claims

1. A blower (1) comprising:
a fan (6) causing a flow of air;
a lower body (3) providing an internal space in which the fan (6) is installed, and having a suction hole (3a) configured to provide air to the fan (6);
a first upper body (10) positioned above the lower body (3), communicating with the inner space of the lower body (3), extending long in the up-down direction, and having one surface at which a first discharge hole (10SL) is formed, the discharge hole (10SL) extending longitudinally and being configured to discharge the flow of air to the outside of the blower (1); and
a first damper (19) extending longitudinally and selectively penetrating the one surface of the first upper body (10) by being movably coupled to the first upper body (10) to adjust the blowing direction of the blower (1), the first damper (19) having one end facing an outside of the first upper body (10) and the other end (19R) opposite to the one end;
**characterized in that** the blower further comprises a first bar (199) extending along the other end (19R) of the first damper (19) and detachably coupled to the other end (19R) of the first damper (19), and configured to improve the rigidity of the first damper, wherein the first bar (199) comprises:
a first part facing the other end (19R) of the first damper (19);
a second part bent at one end of the first part, and facing an outer surface of the first damper (19); and
a third part bent at the other end of the first part, and facing an inner surface of the first damper (19),
wherein a portion of the first damper (19) is positioned between the second part and the third part.

2. The blower of claim 1, further comprising:
a second upper body (20) positioned above the lower body (3), communicating with the inner space of the lower body (3), and having one surface at which a second discharge hole is formed; and
a space (S) formed between the one surface of the first upper body (10) and the one surface of the second upper body (20),
wherein the first damper (19) is movable in a direction close to or away from the one surface of the second upper body (20)

3. The blower of claim 2, further comprising:
a second damper (29) penetrating the one surface of the second upper body (20) and movably coupled to the second upper body (20), the second damper (29) having one end facing the space (S) and the other end (29R) opposite to the one end; and
a second bar (299) extending along the other end (29R) of the second damper (29) and coupled to the other end (29R) of the second damper (29),
wherein the first damper (19) and the second damper (29) are symmetrical to each other with respect to the space (S),
wherein a moving direction of the first damper (19) is opposite to a moving direction of the second damper (29), and
the one end of the first damper (19) faces the one end of the second damper (29) in the moving direction of the first damper (19).

4. The blower according to any one of claims 1 to 3, wherein the first damper (19) has an arc-shaped cross-section and is movable in a circumferential direction of the arc.

5. The blower of claim 4, wherein a radius of curvature of the outer surface of the first damper (19) is greater than a radius of curvature of the inner surface of the first damper (19),
wherein the first damper (19) comprises a protrusion protruding from the outer surface of the first damper (19) toward the second part and adjacent to a rear end of the first damper (19), and
wherein the first bar (199) further comprises a locking portion protruding toward the first damper (19) from a distal end of the second part, and caught by the protrusion.

6. The blower of claim 5, wherein the protrusion further comprises:
an inclined portion inclined with respect to a boundary between the protrusion and the first damper (19);
a horizontal portion connected to the inclined portion, and formed parallel to the boundary; and
a vertical portion connected to the horizontal portion, formed perpendicular to the boundary, and by which the locking portion is caught.

7. The blower of claim 6, wherein a distal end of the locking portion is formed to be round.

8. The blower of any one of claims 5 to 7, wherein the first bar (199) further comprises a guide protrusion protruding from an inner surface of the second part toward the third part, and positioned on the protrusion.

9. The blower of any one of claims 5 to 8, wherein the first damper (19) further comprises a plurality of pins formed at the outer surface of the first damper (19) and spaced apart from each other in a length direction of the first damper (19),
wherein the second part covers the plurality of pins.

10. The blower of any one of claims 1 to 9, wherein the first bar (199) further comprises a rigid portion which is formed while being pressed outward from an inner surface of the third part.

11. The blower of any one of claims 1 to 10, wherein the first bar (199) further comprises an inner protrusion protruding from an inner surface of the second part toward the first damper (19), and in contact with the outer surface of the first damper (19).

12. The blower of any one of claims 1 to 11, wherein the first damper (19) further comprises:
an upper boss formed at an inner surface of the first damper (19), and adjacent to an upper end and the other end of the first damper (19); and
a lower boss formed at the inner surface of the first damper (19), and adjacent to a lower end and the other end of the first damper (19);
wherein an upper end of the first bar is adjacent to the upper boss, and a lower end of the first bar is adjacent to the lower boss.

13. The blower of claim 12, further comprising a first moving assembly including an upper holder fastened to the upper boss and a lower holder fastened to the lower boss,
wherein the first moving assembly comprises:
a motor providing power;
a driving gear fixed to a rotation shaft of the motor;
a first pinion engaged with the driving gear;
a shaft to which the first pinion is fixed; and
a second pinion fixed to the shaft, and spaced apart from the first pinion,
wherein the upper holder comprises an upper rack formed at the upper holder and engaged with the first pinion,
wherein the lower holder comprises a lower rack formed at the lower holder and engaged with the second pinion.

14. The blower of any one of claims 1 to 13, wherein the first damper (19) comprises a resin material,
wherein the first bar (199) comprise a metal material.

## Patentansprüche

1. Gebläse (1), aufweisend:
einen Ventilator (6), der einen Luftstrom erzeugt;
einen unteren Körper (3), der einen Innenraum bereitstellt, in dem der Ventilator (6) installiert ist, und eine Ansaugöffnung (3a) aufweist, die dazu ausgelegt ist, dem Ventilator (6) Luft zuzuführen;
einen ersten oberen Körper (10), der oberhalb des unteren Körpers (3) angeordnet ist, mit dem Innenraum des unteren Körpers (3) in Verbindung steht, sich in einer Längsrichtung in Auf-Ab-Richtung erstreckt und eine Oberfläche aufweist, an der eine erste Auslassöffnung (10SL) ausgebildet ist, wobei sich die Auslassöffnung (10SL) in Längsrichtung erstreckt und dazu ausgelegt ist, den Luftstrom nach außen aus dem Gebläse (1) abzuführen; und
eine erste Klappe (19), die sich in Längsrichtung erstreckt und selektiv in die genannte Oberfläche des ersten oberen Körpers (10) eindringt, indem sie mit dem ersten oberen Körper (10) bewegbar gekoppelt ist, um die Blasrichtung des Gebläses (1) einzustellen, wobei die erste Klappe (19) ein Ende aufweist, das einer Außenseite des ersten oberen Körpers (10) zugewandt ist, und ein anderes Ende (19R), das dem genannten Ende gegenüberliegt;
**dadurch gekennzeichnet, dass** das Gebläse ferner eine erste Stange (199) aufweist, die sich entlang des anderen Endes (19R) der ersten Klappe (19) erstreckt und lösbar mit dem anderen Ende (19R) der ersten Klappe (19) gekoppelt ist und dazu ausgelegt ist, die Steifigkeit der ersten Klappe zu verbessern, wobei die erste Stange (199) aufweist:
einen ersten Teil, der dem anderen Ende (19R) der ersten Klappe (19) zugewandt ist;
einen zweiten Teil, der an einem Ende des ersten Teils gekrümmt ist und einer äußeren Oberfläche der ersten Klappe (19) zugewandt ist; und
einen dritten Teil, der am anderen Ende des ersten Teils gekrümmt ist und einer inneren Oberfläche der ersten Klappe (19) zugewandt ist,
wobei ein Abschnitt der ersten Klappe (19) zwischen dem zweiten Teil und dem dritten Teil positioniert ist.

2. Gebläse nach Anspruch 1, ferner aufweisend:
einen zweiten oberen Körper (20), der oberhalb des unteren Körpers (3) angeordnet ist, mit dem Innenraum des unteren Körpers (3) in Verbindung steht und eine Oberfläche aufweist, an der eine zweite Auslassöffnung ausgebildet ist; und
einen Raum (S), der zwischen der genannten Oberfläche des ersten oberen Körpers (10) und der genannten Oberfläche des zweiten oberen Körpers (20) ausgebildet ist,
wobei die erste Klappe (19) in einer Richtung bewegbar ist, die sich auf die Oberfläche des zweiten oberen Körpers (20) zu oder von dieser weg erstreckt.

3. Gebläse nach Anspruch 2, ferner aufweisend:
eine zweite Klappe (29), die in die genannte Oberfläche des zweiten oberen Körpers (20) eindringt und bewegbar mit dem zweiten oberen Körper (20) gekoppelt ist, wobei die zweite Klappe (29) ein Ende aufweist, das dem Raum (S) zugewandt ist, und ein anderes Ende (29R), das dem genannten Ende gegenüberliegt; und
eine zweite Stange (299), die sich entlang des anderen Endes (29R) der zweiten Klappe (29) erstreckt und mit dem anderen Ende (29R) der zweiten Klappe (29) gekoppelt ist,
wobei die erste Klappe (19) und die zweite Klappe (29) zueinander symmetrisch in Bezug auf den Raum (S) sind,
wobei eine Bewegungsrichtung der ersten Klappe (19) einer Bewegungsrichtung der zweiten Klappe (29) entgegengesetzt ist, und
wobei das genannte Ende der ersten Klappe (19) in der Bewegungsrichtung der ersten Klappe (19) dem genannten Ende der zweiten Klappe (29) zugewandt ist.

4. Gebläse nach einem der Ansprüche 1 bis 3, wobei die erste Klappe (19) einen bogenförmigen Querschnitt aufweist und in einer Umfangsrichtung des Bogens bewegbar ist.

5. Gebläse nach Anspruch 4, wobei ein Krümmungsradius der äußeren Oberfläche der ersten Klappe (19) größer ist als ein Krümmungsradius der inneren Oberfläche der ersten Klappe (19),
wobei die erste Klappe (19) einen Vorsprung aufweist, der von der äußeren Oberfläche der ersten Klappe (19) in Richtung des zweiten Teils hervorsteht und an ein hinteres Ende der ersten Klappe (19) angrenzt, und
wobei die erste Stange (199) ferner einen Verriegelungsabschnitt aufweist, der von einem distalen Ende des zweiten Teils in Richtung der ersten Klappe (19) hervorsteht und von dem Vorsprung aufgenommen wird.

6. Gebläse nach Anspruch 5, wobei der Vorsprung ferner aufweist:
einen gegenüber einer Grenze zwischen dem Vorsprung und der ersten Klappe (19) geneigten Abschnitt;
einen horizontalen Abschnitt, der mit dem geneigten Abschnitt verbunden ist und parallel zu der Grenze ausgebildet ist; und
einen vertikalen Abschnitt, der mit dem horizontalen Abschnitt verbunden ist, senkrecht zu der Grenze ausgebildet ist und durch den der Verriegelungsabschnitt aufgenommen wird.

7. Gebläse nach Anspruch 6, wobei ein distales Ende des Verriegelungsabschnitts abgerundet ausgebildet ist.

8. Gebläse nach einem der Ansprüche 5 bis 7, wobei die erste Stange (199) ferner einen Führungssteg aufweist, der von einer inneren Oberfläche des zweiten Teils in Richtung des dritten Teils hervorsteht und auf dem Vorsprung positioniert ist.

9. Gebläse nach einem der Ansprüche 5 bis 8, wobei die erste Klappe (19) ferner eine Vielzahl von Stiften aufweist, die an der äußeren Oberfläche der ersten Klappe (19) ausgebildet sind und in einer Längsrichtung der ersten Klappe (19) voneinander beabstandet sind,
wobei der zweite Teil die Vielzahl der Stifte überdeckt.

10. Gebläse nach einem der Ansprüche 1 bis 9, wobei die erste Stange (199) ferner einen steifen Abschnitt aufweist, der aus einer inneren Oberfläche des dritten Teils nach außen gepresst ausgebildet ist.

11. Gebläse nach einem der Ansprüche 1 bis 10, wobei die erste Stange (199) ferner einen inneren Vorsprung aufweist, der von einer inneren Oberfläche des zweiten Teils in Richtung der ersten Klappe (19) hervorsteht und mit der äußeren Oberfläche der ersten Klappe (19) in Kontakt steht.

12. Gebläse nach einem der Ansprüche 1 bis 11, wobei die erste Klappe (19) ferner aufweist:
einen oberen Vorsprung, der an einer inneren Oberfläche der ersten Klappe (19) ausgebildet ist und an ein oberes Ende und an das andere Ende der ersten Klappe (19) angrenzt; und
einen unteren Vorsprung, der an der inneren Oberfläche der ersten Klappe (19) ausgebildet ist und an ein unteres Ende und an das andere Ende der ersten Klappe (19) angrenzt,
wobei ein oberes Ende der ersten Stange an den oberen Vorsprung angrenzt und ein unteres Ende der ersten Stange an den unteren Vorsprung angrenzt.

13. Gebläse nach Anspruch 12, ferner umfassend eine erste bewegbare Einheit, die eine obere Halterung aufweist, die an dem oberen Vorsprung befestigt ist, und eine untere Halterung, die an dem unteren Vorsprung befestigt ist,
wobei die erste bewegbare Einheit aufweist:
einen Motor, der Leistung bereitstellt;
ein Antriebszahnrad, das an einer Drehwelle des Motors befestigt ist;
ein erstes Ritzel, das mit dem Antriebszahnrad kämmt;
eine Welle, an der das erste Ritzel befestigt ist; und
ein zweites Ritzel, das an der Welle befestigt ist und vom ersten Ritzel beabstandet ist,
wobei die obere Halterung eine obere Zahnstange aufweist, die an der oberen Halterung ausgebildet ist und mit dem ersten Ritzel kämmt,
wobei die untere Halterung eine untere Zahnstange aufweist, die an der unteren Halterung ausgebildet ist und mit dem zweiten Ritzel kämmt.

14. Gebläse nach einem der Ansprüche 1 bis 13,
wobei die erste Klappe (19) ein Harzmaterial aufweist,
und wobei die erste Stange (199) ein metallisches Material aufweist.

## Revendications

1. Soufflante (1) comprenant :
un ventilateur (6) provoquant un écoulement d'air ;
un corps inférieur (3) fournissant un espace interne dans lequel le ventilateur (6) est installé, et présentant un trou d'aspiration (3a) conçu pour fournir de l'air au ventilateur (6) ;
un premier corps supérieur (10) positionné au-dessus du corps inférieur (3), communiquant avec l'espace interne du corps inférieur (3), s'étendant longitudinalement dans la direction haut-bas, et présentant une surface au niveau de laquelle un premier trou d'évacuation (10SL) est formé, le trou d'évacuation (10SL) s'étendant longitudinalement et étant conçu pour évacuer le flux d'air vers l'extérieur de la soufflante (1) ; et
un premier registre (19) s'étendant longitudinalement et pénétrant sélectivement dans ladite surface du premier corps supérieur (10) en étant accouplé de façon mobile au premier corps supérieur (10) pour régler la direction de soufflage de la soufflante (1), le premier registre (19) présentant une extrémité faisant face à un extérieur du premier corps supérieur (10) et l'autre extrémité (19R) opposée à ladite extrémité ;
**caractérisée en ce que** la soufflante comprend en outre une première barre (199) s'étendant le long de l'autre extrémité (19R) du premier registre (19) et accouplée de manière amovible à l'autre extrémité (19R) du premier registre (19), et conçue pour améliorer la rigidité du premier registre, dans laquelle la première barre (199) comprend :
une première partie faisant face à l'autre extrémité (19R) du premier registre (19) ;
une deuxième partie courbée au niveau d'une extrémité de la première partie, et faisant face à une surface externe du premier registre (19) ; et
une troisième partie courbée au niveau de l'autre extrémité de la première partie, et faisant face à une surface interne du premier registre (19),
dans laquelle une portion du premier registre (19) est positionnée entre la deuxième partie et la troisième partie.

2. Soufflante selon la revendication 1, comprenant en outre :
un second corps supérieur (20) positionné au-dessus du corps inférieur (3), communiquant avec l'espace interne du corps inférieur (3), et présentant une surface au niveau de laquelle un second trou d'évacuation est formé ; et
un espace (S) formé entre ladite surface du premier corps supérieur (10) et ladite surface du second corps supérieur (20),
dans laquelle le premier registre (19) est mobile dans une direction proche ou éloignée de ladite surface du second corps supérieur (20).

3. Soufflante selon la revendication 2, comprenant en outre :
un second registre (29) pénétrant dans ladite surface du second corps supérieur (20) et accouplé de façon mobile au second corps supérieur (20), le second registre (29) présentant une extrémité faisant face à l'espace (S) et l'autre extrémité (29R) opposée à ladite extrémité ; et
une seconde barre (299) s'étendant le long de l'autre extrémité (29R) du second registre (29) et accouplée à l'autre extrémité (29R) du second registre (29),
dans laquelle le premier registre (19) et le second registre (29) sont symétriques entre eux par rapport à l'espace (S),
dans laquelle une direction de déplacement du premier registre (19) est opposée à une direction de déplacement du second registre (29), et
ladite extrémité du premier registre (19) fait face à ladite extrémité du second registre (29) dans la direction de déplacement du premier registre (19).

4. Soufflante selon l'une quelconque des revendications 1 à 3, dans laquelle le premier registre (19) présente une section transversale en forme d'arc et est mobile dans une direction circonférentielle de l'arc.

5. Soufflante selon la revendication 4, dans laquelle un rayon de courbure de la surface externe du premier registre (19) est supérieur à un rayon de courbure de la surface interne du premier registre (19),
dans laquelle le premier registre (19) comprend une saillie faisant saillie à partir de la surface externe du premier registre (19) en direction de la deuxième partie et adjacente à une extrémité arrière du premier registre (19), et
dans laquelle la première barre (199) comprend en outre une portion de verrouillage faisant saillie en direction du premier registre (19) à partir d'une extrémité distale de la deuxième partie, et capturée par la saillie.

6. Soufflante selon la revendication 5, dans laquelle la saillie comprend en outre :
une portion inclinée par rapport à une frontière entre la saillie et le premier registre (19) ;
une portion horizontale reliée à la portion inclinée, et formée parallèle à la frontière ; et
une portion verticale reliée à la portion horizontale, formée perpendiculaire à la frontière, et par laquelle la portion de verrouillage est capturée.

7. Soufflante selon la revendication 6, dans laquelle une extrémité distale de la portion de verrouillage est formée pour être ronde.

8. Soufflante selon l'une quelconque des revendications 5 à 7, dans laquelle la première barre (199) comprend en outre une saillie de guidage faisant saillie à partir d'une surface interne de la deuxième partie en direction de la troisième partie, et positionnée sur la saillie.

9. Soufflante selon l'une quelconque des revendications 5 à 8, dans laquelle le premier registre (19) comprend en outre une pluralité de broches formées au niveau de la surface externe du premier registre (19) et espacées les unes des autres dans une direction de longueur du premier registre (19),
dans laquelle la deuxième partie couvre la pluralité de broches.

10. Soufflante selon l'une quelconque des revendications 1 à 9, dans laquelle la première barre (199) comprend en outre une portion rigide qui est formée tout en étant pressée vers l'extérieur à partir d'une surface interne de la troisième partie.

11. Soufflante selon l'une quelconque des revendications 1 à 10, dans laquelle la première barre (199) comprend en outre une saillie interne faisant saillie à partir d'une surface interne de la deuxième partie en direction du premier registre (19), et en contact avec la surface externe du premier registre (19).

12. Soufflante selon l'une quelconque des revendications 1 à 11, dans laquelle le premier registre (19) comprend en outre :
un bossage supérieur formé au niveau d'une surface interne du premier registre (19), et adjacent à une extrémité supérieure et à l'autre extrémité du premier registre (19) ; et
un bossage inférieur formé au niveau de la surface interne du premier registre (19), et adjacent à une extrémité inférieure et à l'autre extrémité du premier registre (19) ;
dans laquelle une extrémité supérieure de la première barre est adjacente au bossage supérieur, et une extrémité inférieure de la première barre est adjacente au bossage inférieur.

13. Soufflante selon la revendication 12, comprenant en outre un premier ensemble mobile incluant un support supérieur fixé au bossage supérieur et un support inférieur fixé au bossage inférieur,
dans laquelle le premier ensemble mobile comprend :
un moteur fournissant une puissance ;
un engrenage d'entraînement fixé à un arbre de rotation du moteur ;
un premier pignon en prise avec l'engrenage d'entraînement ;
un arbre auquel le premier pignon est fixé ; et
un second pignon fixé à l'arbre, et espacé du premier pignon,
dans laquelle le support supérieur comprend une crémaillère supérieure formée au niveau du support supérieur et en prise avec le premier pignon,
dans laquelle le support inférieur comprend une crémaillère inférieure formée au niveau du support inférieur et en prise avec le second pignon.

14. Soufflante selon l'une quelconque des revendications 1 à 13, dans laquelle le premier registre (19) comprend un matériau de résine,
dans laquelle la première barre (199) comprend un matériau métallique.
